# EUROPEAN PATENT APPLICATION

(11) **EP 4 576 464 A1**
(43) Date of publication of application: **25.06.2025**
(21) Application number: 24220914.6
(22) Date of filing: 18.12.2024
(51) Int. Cl.: H02G 15/113, H02G 15/184, H02G 15/103, H02G 15/013

(54) **CABLE JOINT FOR MUTUALLY CONNECTING A FIRST CABLE END AND A SECOND CABLE END**

(30) Priority: 21.12.2023 NL 2036628
(71) Applicant: Leia B.V., 7061 DT Terborg (NL)
(72) Inventor: Van Lent, Frank Johannes Paul, 7061 DT Terborg (NL); Bergsma, Dennis Jurjen, 7061 DT Terborg (NL)
(74) Representative: Arnold & Siedsma

(57) **Abstract**

The invention relates to a cable joint for mutually connecting a first cable end and a second cable end, the cable joint comprising a shell defining a hollow interior space, into which the first cable end and the second cable end can extend in order to be mutually connected within the hollow interior space. The hollow interior space is fillable with a curable resin. According to the invention, the cable joint further comprises at least one motion promotor, for allowing the first and/or second cable end to expand and/or contract with respect to the shell after curing of said resin. The invention also relates to a resin for use in such a cable joint, which comprises at least one motion promotor.

## Description

The invention relates to a cable joint for mutually connecting a first cable end a second cable end, comprising a shell defining a hollow interior space, into which the first and second cable ends can extend in order to be mutually connected within said space. This hollow interior space can then be filled with a curable resin.

Cable joints are used in the underground connections of power cables with a variety of voltages, e.g. high-voltage cables. Due to the high powers involved in these applications, cable joints must meet stringent requirements in terms of electrical performance. To meet these requirements, cable joints generally use several stress relief and insulation layers. To guarantee proper functioning of these components, they must be protected against e.g. external influences, such as forces, moisture, temperature changes, etc. Failed protection of the electrical components could lead to inadvertent discharges, which on the hand present energy losses but which are also problematic for cause a further degradation of electric properties. A serious fault often locally results in catastrophic consequences, such as complete and irreparable failure of the connection, the cable joint, and parts of the cables involved. At the same time, the lost connection could result in power outages or increased risk to other parts of the grid, which may bring about further economic damage. Therefore, it is vital to protect the connection from damage, for instance from water and external forces.

Principally, electrical insulation requirements can be provided by a component known in the art as a body. Bodies typically include several layers of insulating and semi-conducting material. Bodies can be pre-stretched, so that a cold-shrinking effect can be employed by removing pretension means. Such bodies, e.g. cold-shrink bodies, are usually provided around a physical connection between the cable ends, made using a conductive component called the connector. The connector provides electrical contact and fixes at least to some extent the cable ends to each other. The body can be provided around the connector, however it is also possible a body is used that includes as a part thereof the connector. Whilst these bodies perform relatively adequately, and are therefore commercially successful to some extent, a need remains to further protect them, against in particular water and mechanical forces.

As used throughout this application, a body is a component used as an isolating medium around the connection of the cores of cables, and to provide materials for gradually decreasing the electrical field towards the shield or ground of a cable. In the art, said cable connection is often provided through the use of a mechanical connector, such as a terminal block. In this application, the body does not comprise the shield, or any exterior covering or protection. Nevertheless, these components are provided when bodies are used in the art. As an example, it is known to cover a body, specifically a cold-shrink body, in a shield, and to cover the shield in a heat-shrink sleeve.

While such heat-shrink sleeves work in some applications, they leave room for improvement. In particular, the applicant has realized that it would be advantageous to cast a body (and shield) in a resin, inside a rigid casing, i.e. a shell, to form a complete cable joint. The heat-shrink sleeve mentioned above would thus be replaced by the resin and shell. However, manufacturing a cable joint that fulfills all safety requirements is not trivial. In particular, problems arise during load tests, in which cable ends become so hot that the associated thermal expansion of the cable ends and/or the connection between them damages the resin and shell. Thermal expansion is a problem that occurs specifically under heavier loads (i.e. high currents), as the corresponding temperatures of the cables becomes higher. As cable joints using a (cold-shrink) body for interconnecting the cable ends are often used for more demanding applications, these bodies may experience significant heat and thus might be prone to thermal expansion. It is therefore that the problem of thermal expansion is especially relevant when (cold-shrink) bodies are employed.

It is an object of the invention to at least partially address this problem. More specifically, it is an object of the invention to provide a way of protecting a cold-shrink body.

The object is achieved by a cable joint according to the preamble, which further comprises at least one motion promotor, for allowing the first and/or second cable end to expand and/or contract with respect to the shell after curing of said resin.

Said motion promotor can enable the internal components to expand and contract with respect to the shell even after the resin has cured. As such, the motion promotor at least partially decouples the cable ends from the shell in a mechanical sense. This means that mechanical stress tends to be limited or even avoided, or otherwise distributed.

In particular, relatively large mechanical stresses at weak points in the shell (such as between two shell parts) could cause a local strain, which in turn leads to cracking of the resin and thus local failure of the cable joint. The advantage of protection achieved by using a curable resin in a shell can thus be fully enjoyed if a motion promotor is used, to allow for motion of the cable ends which would otherwise be limited by the resin being cured.

In general, the resin with which the shell is filled completely surrounds the cable ends and the connection between them. Depending on the resin used, the shell may no longer be required (as it can be sufficiently strong after curing), but shells are often left in place regardless to further increase strength, as they are needed during and before curing of the resin.

Suitable resins may be polyurethane based, but the applicant has also found that epoxy and silyl modified polymers may be suitable for use as a resin. All these resins, if they are curable, benefit from the motion promotor.

This advantage can be achieved either with, or without use of a (cold-shrink) body. It is however preferred the cable joint comprises a cold-shrink body, so that the resin is cast around the cold-shrink body to protect it.

This configuration has the advantage that functionalities are split between components. On the one hand, the (cold-shrink) body is used for its electrical properties, whilst the shell and resin are used for mechanical protection (and against e.g. water). The design is therefore particularly modular, and allows for easy further development or tailoring to particular applications.

The at least one motion promotor could provide an expansion space for the first and/or second cable end.

The expansion space can be used to absorb expansion of the cable ends and/or the connection between them, so that any thermal expansion has no or less influence on the resin or on the shell. Accordingly, no or less stress is present due to the availability of the expansion space.

It is advantageous if the expansion space is provided by the motion promotor, so that the expansion space is automatically kept free from resin when the shell is filled with resin.

For that purpose, the at least one motion promotor may comprise at least one compressible medium, to provide the expansion space by compressibility of said at least one compressible medium.

A compressible medium can possibly better spread the forces applied by the expansion of the internal components throughout itself.

The at least one motion promotor may comprise at least one foam element. Foam elements may provide sufficient expansion space in reaction to even relatively small compressive forces. Accordingly, foam elements may be particularly effective in reducing stress due to thermal expansion.

In particular, the at least one foam element can be at least one foam pad. By using foam pads, providing the motion promoting functionality in a position of choice becomes relatively easily. In particular, a foam pad may cover a relatively large area across its main face, whilst being of relatively small thickness. Accordingly, foam pads may not prevent resin to completely surround an protect the cable ends, but at the same time allow expansion across a large area. Moreover, foam pads may be prefabricated, thereby facilitating production of the cable joint. Foam pads may be further be easily handled by workers, facilitating installation in the field or production in the factory.

Foam pads have the further advantage that they may be pre-arranged in the shell, thereby facilitating installation of the cable joint.

It is noted that the at least one first motion promotor, which is introduced further below, may comprise at least one foam pad as described herein.

In a specific embodiment of the invention, comprising a plurality of foam pads, the foam pads can be shaped to collectively form an annular shape for the first and/or second cable end to pass through.

By having an annular shape for the cable ends to pass through, motion can be promoted all around the cable ends. At the same time, the annular shape being formed from a collection of pads may allow arrangement of the collection of pads around the cable end from the radial direction, by splitting and then combining the pads. This may facilitate installation, as opposed to a single annular pad which would require translation along the axis of the cable end, before the cable ends are connected to each other.

As an example sets of two half cylindrically shaped foam pads could form an annular shape.

In another embodiment of the invention, at least one first of the at least one motion promotor, is arranged near a longitudinal end of the shell of the cable joint.

Preferably two such motion promotors are present, each on a longitudinal end of the cable joint.

Presence of motion promotors near the longitudinal ends of the cable may be particularly advantageous for allowing or absorbing displacements in an axial or circumferential direction defined by the cable joint. Additionally or alternatively, the motion promotors in this location may prevent a seal, which could be applied at the longitudinal end, to fail due to any unabsorbed motions or forces.

In particular, the at least one first motion promotor may be disposed against a wall of the shell.

It has been found that in this configuration, the at least one first motion promotor can adequately decouple the resin from the shell, so that if thermal expansion occurs and causes cured resin to want to move, the movement is accommodated by the first motion promotor. As a result, the likelihood of said movement causing damage to the shell is reduced. In effect, the at least one first motion promotor thus decouples the shell on the hand from the resin and the cable ends on the other hand.

Additionally or alternatively, the at least one first motion promotor can be pre-arranged in the shell, wherein pre-arranged may mean placed in the shell of the cable joint before the cable is disposed in the cable joint. This could for example be by being placed against a wall of the shell, for instance when the shell comprises two shell parts that are later joined together to form the complete shell of the cable joint. This may reduce the workload during installation of the cable joint.

The cable joint may further comprise sealing means separate from the at least one motion promotor. Sealing means can be used to reduce the chance of moisture or dirt entering the cable joint even further. In particular, the sealing means may provide a seal between the shell on the one hand, and one or both of the cable ends on the other hand. Sealing means may also be present between shell parts, if they are provided. Ensuring the sealing means are separate, i.e. distinguished, from the at least one motion promotor allows a separation of functions between the two components. As a results, forces and stress on the sealing means can be reduced by the motion promotor, which in turn can lead to maintaining a better seal on the cable joint.

In another embodiment of the invention, the cable joint comprises the curable resin, and the hollow interior space is filled with the curable resin. In this embodiment, the resin includes the at least one motion promotor.

By having the resin include the motion promotor, it is automatically distributed with the resin throughout the hollow interior space. As a result, movement due to thermal expansion may be adequately compensated. Additionally or alternatively, it may be advantageous that the motion promotor need not be separately installed, but is automatically provided with the resin.

As an example, the at least one motion promotor in the resin can comprise a plurality of compressible elements, such as foam elements. These compressible elements can be mixed in with the resin beforehand, for instance at the time the resin is manufactured or mixed (in case of multicomponent resin). The compressible elements may be able to change the bulk properties of the cured resin, which in total would become more flexible. Accordingly, movement is promoted, so that thermal expansion can be compensated in the resin itself, thereby reducing the likelihood of damage to e.g. the shell or the resin itself by thermal expansion.

Furthermore, the at least one motion promotor in the resin can comprise gas bubbles, either as a replacement of the compressible elements named earlier, but could also be an additional component alongside them.

Gas bubbles in the resin could be provided by using a foaming resin, or by injecting bubbles into the resin before using it to fill the hollow interior space. They serve the same purpose as the compressible elements, since gas bubbles are also themselves compressible.

The at least one motion promotor may comprise at least one second motion promotor.

In particular, the at least one second motion promotor can be arranged centrally between longitudinal ends of the shell of the cable joint. This usually means in the middle of the cable joint as seen in a longitudinal direction, and/or may be at the connection of the first and the second cable ends, as this is the place where largest part of the thermal expansion is expected, and thus the place where a motion promotor is most needed during operation of the cables.

Surprisingly, it has been found that a motion promotor arranged centrally as explained above, may drastically reduce the likelihood of damage to the shell and/or resin.

The at least one second motion promotor can be substantially longitudinal and hollow, preferably for having the first cable end and/or the second cable end pass therethrough, so that it encloses the connection entirely. In this configuration, forces directed radially with respect to the cable ends can be compensated for effectively.

In particular, an external cross sectional dimension of the at least one second motion promotor is smaller than an internal cross sectional dimension of the hollow interior space of the shell. In this case, the second motion promotor is shaped to allow resin to surround the motion promotor within the hollow interior space. As a result of the second motion promotor absorbing at least some movements due to thermal expansion, the surrounding resin is left at least somewhat undisturbed, which may contribute to at least that part of the resin being less likely to fail.

If the cable joint comprises the first cable end and the second cable end, an internal cross sectional dimension of the at least one second motion promotor may correspond to an external cross sectional dimension of the first cable end and/or the second cable end.

Accordingly, the cables may fit snugly in the motion promotor, which may increase efficacy of the motion promotor. This increase in efficacy is in part believed to originate from the fact that any thermal expansion of the cable ends or connection between them is compensated for as locally as possible. Additionally or alternatively, a relatively large amount of resin surrounds the motion promotor in this configuration, and is therefore left relatively undisturbed by thermal expansion, and therefore less likely to fail.

As yet another option of promoting motion, a coating can be applied on an inside of the shell defining the hollow interior space.

A coating may reduce or prevent the adhesion of the resin to the shell, thus essentially at least partly decoupling the cable ends from the shell of the cable joint by at least partly decoupling the resin. The decoupling works to allow at least some motion, so that if thermal expansion causes the resin to want to move with respect to the shell, this movement does not effect the structural integrity of the shell. In fact, the movement would be at least partially absorbed.

The coating could be a wet coating (e.g. applied wet but is left to dry), or a layer of material such as PTFE, or any other layer that prevents or reduces adhesion of the resin to the shell.

It is noted that it is principally possible to manufacture the shell from a material that does not allow adhesion by the particular resin used, to also allow for motion. However, the applicant has found on the one hand that this solution may not work sufficiently well, and also that a wider range of shell materials can be chosen from if a coating is applied to the shell material.

The invention also relates to a resin, which is preferably curable, for filling a cable joint. According to the invention, the resin includes at least one motion promotor. An example of such a resin could be as described hereabove. The resin might offer the advantage described above. Put briefly, the motion promotor may allow absorbing local movements caused by thermal expansion of the cable ends and connection between them, thereby limiting damage to the shell of a cable joint, and/or to the resin itself.

In particular, the resin could have at least one motion promotor comprising a plurality of compressible elements, such as foam elements, and/or gas bubbles. As described earlier in the description, this will cause the resin to be somewhat flexible and may allow for small local movements. As a result, the resin can be used in cable joints that have a shell, which can be rigid, on the outside, and which employ a body for connecting cable ends.

The invention will be further elucidated with reference to the attached drawings, in which:
Figure 1 shows schematically an perspective view of a cable joint;
Figure 2 shows schematically a top view of the cable joint of figure 1, with a top shell part removed;
Figure 3 shows schematically an exploded view of the cable joint of figures 1-2, with first and second cable ends connected, and motion promotors disposed around the cable; and
Figure 4 shows schematically an exploded view of the cable joint and the cable ends.

Throughout the figures, like elements will be referred to using like reference numerals.

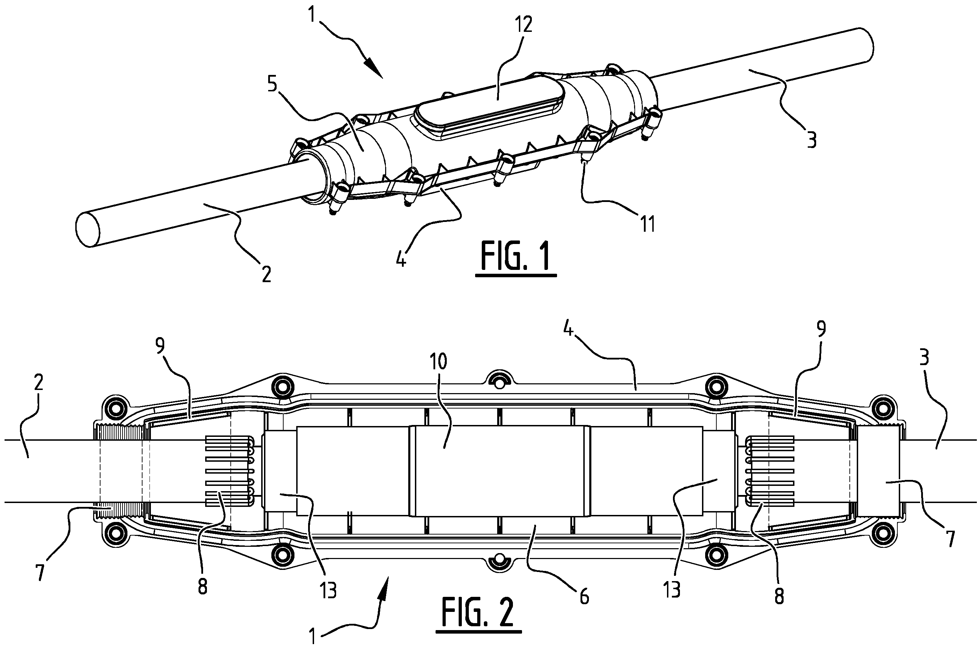

Figure 1 shows a cable joint 1, for connecting the ends of a first cable 2 and a second cable 3. The first and second cable ends and their connection are not visible in this figure, as they are inside the shell 4, 5 of the cable joint 1. A first cable 2 and a second cable 3 are shown, which extend into the shell 4, 5 of the cable joint 1, and which are mutually connected inside the cable joint 1. The cable joint 1 comprises two shell parts 4, 5, one first shell part 4 on the bottom, and one second shell part 5 on its top side. In this example, the shell parts 4, 5 are connected at several locations through several bolts 11. The cable joint 1, after having been filled with resin, has been sealed with a top cover 12.

Now referring to figure 2, the cable joint 1 can be seen with the second shell part 5 removed, so that the interior of the cable joint 1 can be seen. With the cable joint 1 opened, it is visible that the first shell part 4 and the second shell part 5 together form a hollow interior space 6, which can be filled with a resin, which is not shown in the figure. Again, it can be seen that the first cable 2 and the second cable 3 extend into the cable joint 1, into the hollow interior space 6, and meet in a second motion promotor 10, which in this case is a foam pad disposed in the middle of the cable joint 1. The second motion promotor 10 is substantially longitudinal in shape and is hollow, in fact it is shaped like a hollow cylinder, to allow the ends of the cables 2, 3 to run through it. An internal diameter of the second motion promotor 10 is chosen so that it snugly surrounds the ends of the cables 2, 3.

Furthermore, first motion promotors 9 are shown, on both longitudinal ends of the cable joint 1. Sealing means 7 are also visible. The sealing means 7 serve to seal the shell 4, 5 with respect to the cables 2, 3 and are separate from the first motion promotors 9. Several alternatives for the sealing means 7 are available to the skilled person, ranging from gaskets of varying complexity, specifically shaped rubber components, or (self-amalgamating) tape, the latter being used as an example in the figures.

The skilled person is also familiar with several options for connecting the ground or shield of the cables to each other. A particularly suitable solution appears to be the provision of a conducting mesh around the body, although not shown in the figures. The mesh (or another ground connector) could be placed directly around the body, but within the second motion promotor 10, in order to connect the shields 8 of the cables 2, 3. As an alternative, the mesh, or any other ground connector, could be positioned around the second motion promotor 10.

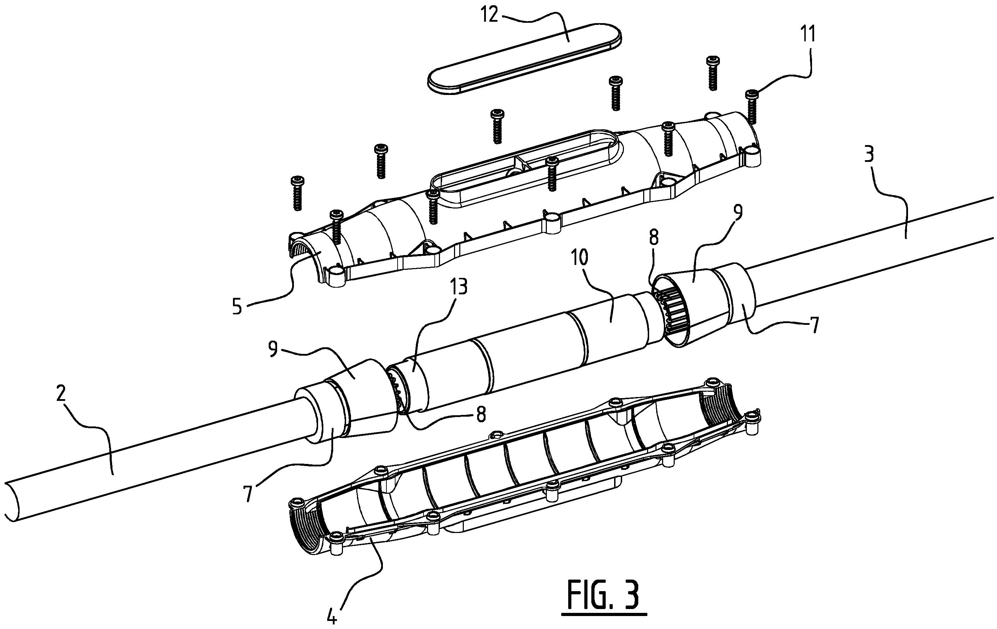

Figure 3 further illustrates inner components of the cable joint 1. First motion promotors 9 can be distinguished, each of which consists as an example of two separate foam pads. Each pair forms a compressible medium around the entirety of its respective cable 2, 3. Whilst it is possible to similarly manufacture the second motion promotor from two separate pads, this is not the case in the current example. Instead, the second motion promotor 10 is a single foam pad of hollow cylindrical shape. the second motion promotor 10 may or may not be provided with a longitudinal slit to allow positioning it over the cables 2, 3, even after they have been connected. If no slit is provided, the second motion promotor 10 can be placed over one of the cables 2, 3 before connection, and slid into place after connection, a method which is called "parking" in the art.

Further bolts 11 are visible that connect the first shell part 4 to the second shell part 5 at their respective connection locations, and a top cover 12 has been lifted to show the opening the second shell part 5 comprises. The opening 5 is used to fill the shell 4, 5 of the cable joint 1, more particularly its hollow interior space, with a resin after connecting the cables 2, 3 and closing the shell parts 4, 5.

Finally, a cold-shrink body 13 is visible, which is placed inside the second motion promotor 10. The cold-shrink body 13 is not described in more detail, as several such bodies are available and would be suitable for connecting the cores of the cables 2, 3 to each other. It is noted that depending on the application, a body 13 can be chosen with sufficient stress control elements to reduce the electric field between the core and the ground.

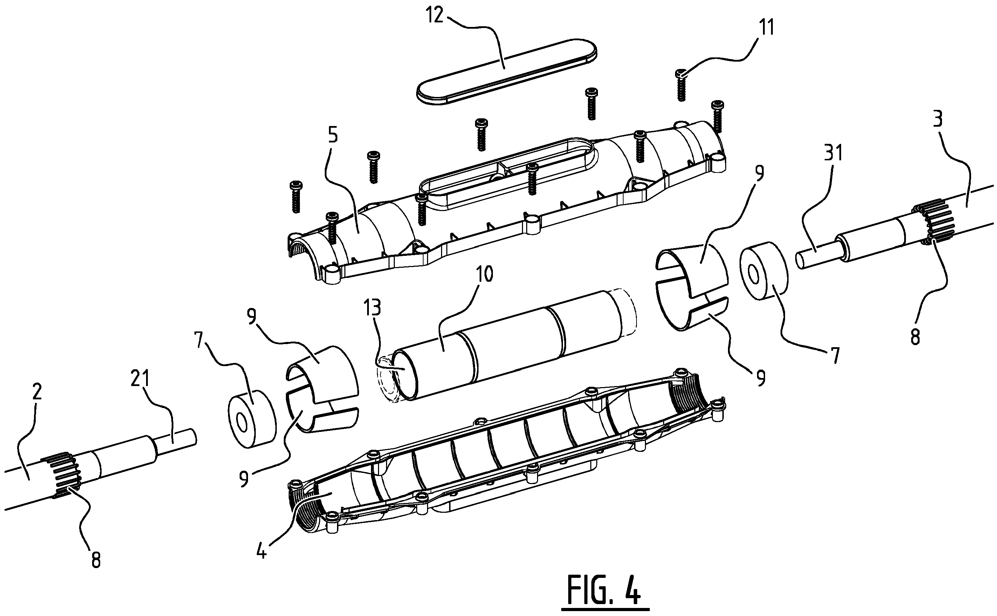

Figure 4 shows a similar exploded view, but this time the cable connection is also shown in an exploded view. This reveals that the first cable 2 comprises a core 21, and the second cable 3 comprises a core 31 also. The cable cores 21, 31 are mutually connected using the body 13, which could be an off-the-shelf body, and in this particular example is a cold-shrink body. In this case the cold-shrink body includes a connector for the cable cores 21, 31, and field control elements, but no connection for the ground. The body 13 is shown in dotted lines, so that it can be clearly distinguished from the second motion promotor 10.

It should be noted that the above-mentioned embodiments illustrate rather than limit the present invention and that those skilled in the art will be able to design alternative embodiments without departing from the scope of the appended claims.

As an example, and although in the embodiments shown the motion promotors are shown to be foam pads, alternatives are also envisioned. In particular, the motion promotor may take the form of compressible elements, such as foam elements or gas bubbles, in the resin, or of a coating on the inner surface of the shell.

In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

## Claims

1. Cable joint for mutually connecting a first cable end and a second cable end, the cable joint comprising a shell defining a hollow interior space, into which the first cable end and the second cable end can extend in order to be mutually connected within the hollow interior space,
wherein the hollow interior space is fillable with a curable resin,
**characterized in that**
the cable joint further comprises at least one motion promotor, for allowing the first and/or second cable end to expand and/or contract with respect to the shell after curing of said resin.

2. Cable joint according to the previous claim, wherein the first cable end and the second cable end are electrically connected to each other by a connector insulated using a body, preferably a cold-shrink body, and said connector is electrically shielded by said same body.

3. Cable joint according to any of the preceding claims, wherein the at least one motion promotor provides an expansion space for the first and/or second cable end.

4. Cable joint according to the previous claim, wherein the at least one motion promotor comprises at least one compressible medium, to provide the expansion space by compressibility of said at least one compressible medium.

5. Cable joint according to any of the preceding claims, wherein the at least one motion promotor comprises at least one foam element, optionally wherein the at least one foam element is at least one foam pad.

6. Cable joint according to the previous claim, wherein the at least one foam pad comprises a plurality of foam pads, shaped to collectively form an annular shape for the first and/or second cable end to pass through.

7. Cable joint according to any of the preceding claims, wherein at least one first of the at least one motion promotor, is arranged near a longitudinal end of the shell of the cable joint.

8. Cable joint according to the previous claim, wherein the at least one first motion promotor is disposed against a wall of the shell.

9. Cable joint according to the previous claim, the at least one first motion promotor is pre-arranged in the shell.

10. Cable joint according to any of the preceding claims, the cable joint further comprising sealing means separate from the at least one motion promotor.

11. Cable joint according to any of the preceding claims, wherein the at least one motion promotor comprises at least one second motion promotor.

12. Cable joint according to the previous claim, wherein the at least one second motion promotor is arranged centrally between longitudinal ends of the shell of the cable joint.

13. Cable joint according to any one of claims 11 - 12, wherein the at least one second motion promotor is substantially longitudinal and hollow, preferably for having the first cable end and/or the second cable end pass therethrough.

14. Cable joint according to the previous claim, wherein an external cross sectional dimension of the at least one second motion promotor is smaller than an internal cross sectional dimension of the hollow interior space of the shell, wherein preferably
the cable joint comprises the first cable end and the second cable end, an internal cross sectional dimension of the at least one second motion promotor corresponding to an external cross sectional dimension of the first cable end and/or the second cable end.

15. Cable joint according to any of the preceding claims, wherein the at least one motion promotor comprises a coating on an inside of the shell defining the hollow interior space.
